Europäisches Patentamt

European Patent Office

Office européen des brevets

(11) Publication number: **0 324 949 B1**

# EUROPEAN PATENT SPECIFICATION

(45) Date of publication of patent specification: **09.12.92**  (51) Int. Cl.⁵: **G11B 7/095**

(21) Application number: **88120868.0**

(22) Date of filing: **20.09.86**

(60) Publication number of the earlier application in accordance with Art.76 EPC: **0 216 341**

(54) Tracking system for optical disc memory.

(30) Priority: **27.09.85 JP 215695/85**
**30.10.85 JP 245095/85**
151846

(43) Date of publication of application:
**26.07.89 Bulletin 89/30**

(45) Publication of the grant of the patent:
**09.12.92 Bulletin 92/50**

(84) Designated Contracting States:
**DE FR GB IT**

(56) References cited:
**GB-A- 2 062 901**

**PATENT ABSTRACTS OF JAPAN, vol. 8, no. 237 (P-310) 1674, 30 October 1984; & JP-A-59 1121442**

**PATENT ABSTRACTS OF JAPAN, vol. 8, no. 144 (P-284) 1581, 5 July 1984; JP-A-59 042673**

**PATENT ABSTRACTS OF JAPAN, vol. 9, no. 243 (P-392) 1966, 30 September 1985; JP-A-60 095736**

**PATENT ABSTRACTS OF JAPAN, vol. 9, no. 327 (P-415) 2050, 21 December 1985; JP-A-60**

(73) Proprietor: **SHARP KABUSHIKI KAISHA**
**22-22 Nagaike-cho Abeno-ku**
**Osaka 545(JP)**

(72) Inventor: **Deguchi, Toshihisa**
**C-722, Daiya-haitsu Gakuenmae, 2-200-5**
**Gakuendaiwa-cho Nara-shi Nara-ken(JP)**
Inventor: **Inui,Tetsuya**
**14 Inyo-cho**
**Nara-shi,Nara-ken(JP)**
Inventor: **Ohta,Kenji**
**3-9-17,Hirosedai Kawai-cho**
**Kitakatsuragi-gun,Nara-ken(JP)**
Inventor: **Katoh,Shohichi**
**476-90,Hieda-cho**
**Yamatokoriyama-shi,Nara-ken(JP)**

(74) Representative: **Selting, Günther, Dipl.-Ing. et al**
**Patentanwälte von Kreisler, Selting, Werner**
**Deichmannhaus am Hauptbahnhof**
**W-5000 Köln 1(DE)**

## Description

The present invention relates to a tracking system for an optical memory device of a type wherein any of the information recording, reproduction and erasing can be carried out by radiating a laser beam to a memory medium.

(Description of the Prior Art)

Optical memory devices have recently drawn the attention of people as a high density, high capacity memory device. The reason for this optical memory device to be of high density and high capacity is because the size of each bit which represents the unit of information storage capacity can be reduced to a diameter of about 1 $\mu$m. This, in turn, however, imposes some limitations on the optical memory device. More specifically, in order for information to be recorded on, or reproduced from, a predetermined location, the light beam is required to be accurately positioned.

Because of the foregoing, when using a disc capable of accommodating information additionally recorded on a disc capable of recording information simultaneously with erasure of the previously recorded information, it is a general practice for the disc substrate to be permanently provided with beam guide tracks or address information.

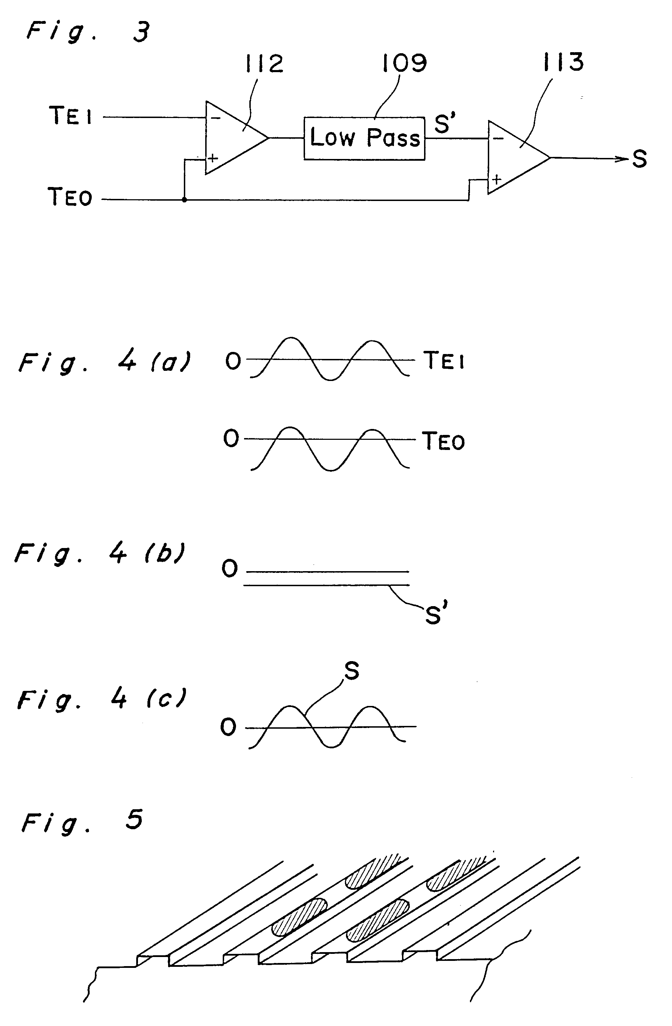

The guide tricks generally have a shape as shown in Fig. 5 of the accompanying drawings and are in the form of grooves of a depth generally equal to the wavelength $\lambda$ divided by the product of the refractive index n times 8, i.e., $\lambda/8n$. Any of the information recording, reproduction and erasing is carried out while the light beam undergoes scanning guided along these guide grooves.

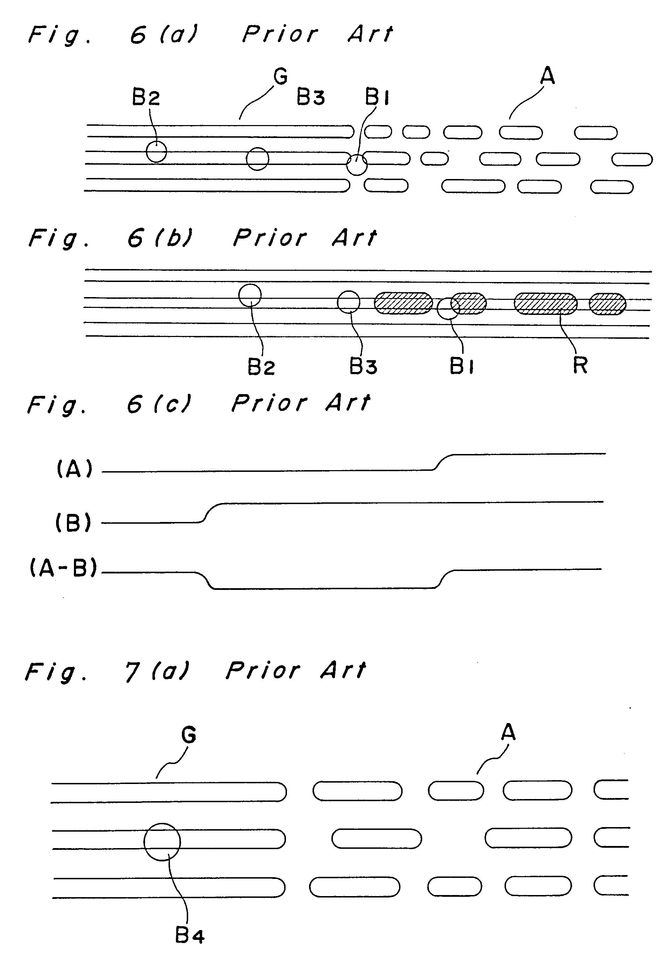

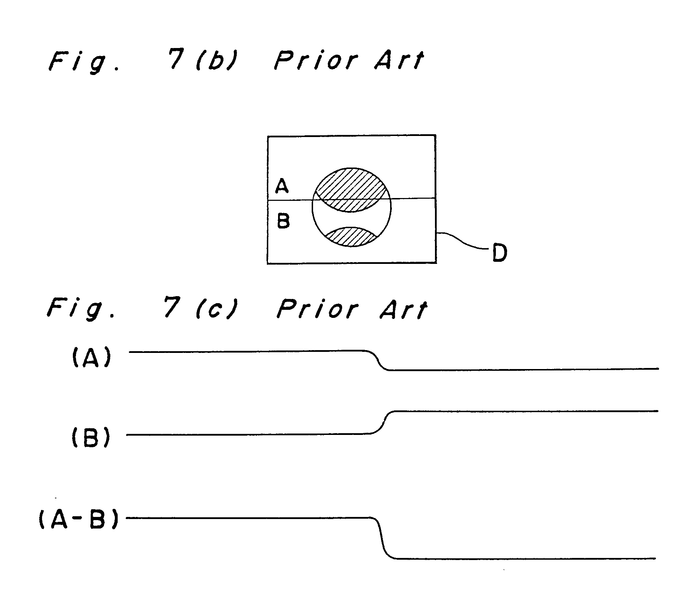

As a means for sensing a tracking signal from the guide grooves, two methods are well-known; a Twin Spot method (a three-beam method) such as generally used in association with VD (video disc) and CD (compact disc), and a push-pull method such as generally used in association with an optically writeable disc. The Twin Spot method and the push-pull method are illustrated respectively in Figs. 6 and 7 of the accompanying drawings.

The Twin Spot method has an advantage in that a stable tracking performance can be achieved even though a pick up is inclined relative to the optical disc substrate. However, it has a problem in that, when a tracking beam scans a boundary between a guide groove region G and an address information region A constituted by a plurality of pits as shown in Fig. 6(a), the tracking tends to be disturbed because of the difference between a diffraction efficiency on the leading beam $B_1$ and that on the trailing beam $B_2$. It is to be noted that reference character R used in Fig. 6(b) represents recorded bits.

On the other hand, although the push-pull method is generally free from the above mentioned problem inherent in the Twin Spot method because of the tracking performed by a single beam $B_4$ as shown in Fig. 7(a), it has a problem in that, because the position of the light beam which has been reflected towards a detector D shown in Fig. 7(b) tends to displace relative thereto in the event of occurrence of a shift in position of a lens as a result of the tracking or in the event of inclination of the pick-up relative to the disc, the tracking error signal tends to accompany a steady drift which will bring about a steady shift in tracking. Accordingly, in the event that the pick-up has inclined relative to the disc, the pattern of diffraction occurring at the guide groove region and that at the address information region differ from each other and, as a result thereof, the amount of tracking shift necessarily deviates to such an extent as to result in the disturbed tracking at the boundary. Figs. 6(a) to 6(c) and Figs. 7(a) to 7(c) are schematic representations illustrative of the change in tracking error signal occurring during the tracking at the boundary according to these two methods, respectively.

In these figures, the servo region is considered to be sufficiently lower than the pit reproducing frequency and, therefore, an output of the detector during the tracking at the address information region is shown as an average value. Fig. 6 applies where the difference in amount of beams reflected is taken as the tracking error signal, whereas Fig. 7 applies where the difference in output from detectors for detecting two split beam components is taken as the tracking error signal.

JP-A-57 151 543 describes a tracking control system operating according to the Twin Spot method, using a main light beam and two auxiliary light beams, all three light beams scanning the same track of a disc. The two auxiliary light beams produce a first tracking error signal and a second tracking error signal is produced by the main light beam. Both tracking error signals are fed to a subtractor through an equalizer. The output of the subtractor delivers the tracking signal for correcting the position of a mirror. However, this system has the above-mentioned problem that the tracking tends to be disturbed when the tracking beam scans the boundary between the guide groove region and an adress information region.

It is an object of the present invention to provide a tracking system that effects a correct tracking even at the boundaries between different zones of the track.

This problem is solved, according to the invention, with the features of claim 1.

The present invention will become clear from the following description taken in conjunction with preferred embodiments thereof with reference to the accompanying drawings, in which:

Fig. 1     is a schematic diagram showing an optical head for magneto optic disc according to one embodiment of the present invention;

Fig. 2     is a diagram showing an electrical circuit forming a detecting means for detecting a tracking error signal;

Fig. 3     is a circuit block diagram showing the circuit of the detecting means;

Fig. 4     is a chart showing waveforms of signals appearing in the circuit of Fig. 3;

Fig. 5     is a perspective view of a portion of a disc substrate;

Fig. 6     is a plan view of a portion of the disc substrate onto which the laser beams are projected;

Fig. 7(a)  is a plan view of a portion of the disc substrate onto which the laser beams are projected;

Fig. 7(b)  is a schematic diagram showing the detector on which the beam spot is reflected; and

Fig. 7(c)  is a diagram showing waveforms of the signals.

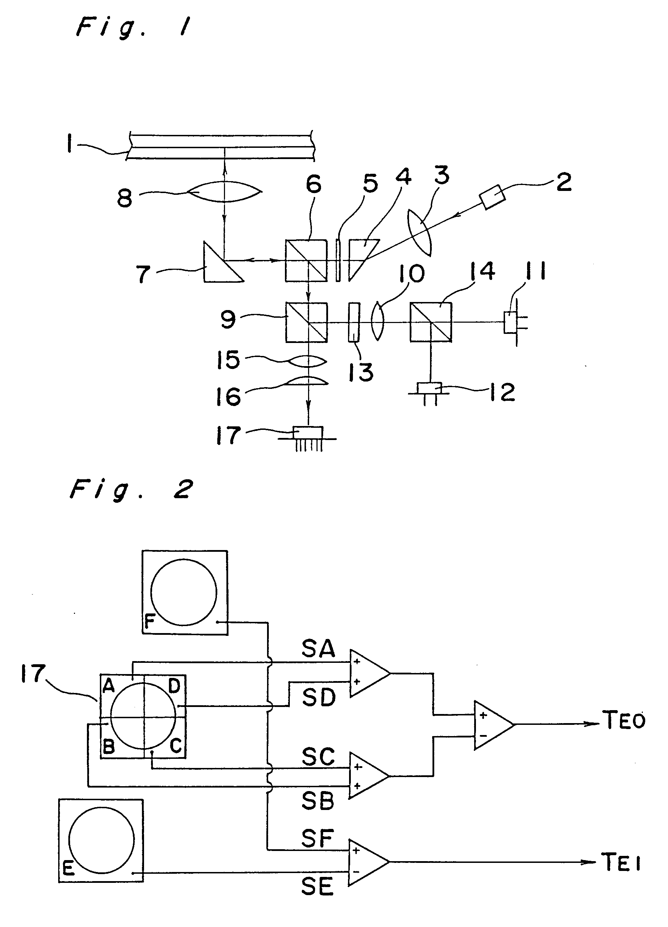

Figs. 1 and 2 illustrate the structure of an optical head for magneto optic disc and a circuit forming a detecting means for detecting a tracking error signal outputted form the optical head, respectively.

Referring first to Fig.. 1, reference numeral 1 represents a magneto optic disc comprising a disc substrate which has the previously discussed guide grooves and address information and is coated with a magnetizeable layer having an anisotropy of magnetism in a vertical direction. A laser beam produced from a semiconductor laser device 2 travels through a collimator lens 3 and then through a shaping prism 4 by which the cross-sectional representation of the laser beams which is elliptical is transformed into a generally circular shape. Reference numeral 5 represents a diffraction grating for splitting the laser beam by the utilization of a diffraction effect, the diffracted light of a spectral degree of 0 and ±1 being utilized. A polarizing beam splitter 6 is disposed between the diffraction grating 5 and an objective lens 8 for projecting a tiny spot of laser beam onto the magnetizeable layer on the magneto optic disc after having been deflected 90° by a total reflecting mirror 7. This polarizing beam splitter 6 serves to improve the polarization ratio of the incoming light and to further rotate the plane of polarization of the light, reflected from the disc, for generally increasing the angle of magneto optic rotation. This beam splitter 6 also serves to guide a portion of the laser beam toward photo-detectors 11, 12 and 17 as will be described later.

The objective lens 8 referred to above is in practice driven by a servo control circuit (not shown) so that the size and position of the light spot projected onto the information tracks on the magnetizeable layer of the disc can be adjusted. Reference numeral 9 represents a polarizing beam splitter having, as is the case with the beam splitter 6, a function of increasing the angle of magneto optic rotation with respect to the reflected light. Reference numeral 10 represents a spot lens for projecting the information light, reflected from the beam splitter 9, onto the photo-detectors 11 and 12 in a predetermined spot size. A half wavelength plate 13 is positioned between the beam splitter 9 and the spot lens 10 for rotating the plane of the polarization of the information light in a direction intermediate between S-axis and P-axis of a polarizing beam splitter 14 which acts as an analyzer. Reference numeral 15 represents a spot lens, and reference numeral 16 represents a cylindrical lens so disposed as to have its focal line inclined 45° relative to the direction of connection of the guide grooves of the magneto optic disc 1.

Positioned on one side of the cylindrical lens 16 opposite to the spot lens 15 is the photo-detector 17 of composite element type which includes six photo-detector elements A to F that are arranged in a pattern as shown in Fig. 2. By the cumulative effects of the spot lens 15 and the cylindrical lens 16, both the change in relative distance between the magnetizeable layer of the magneto optic disc 1 and the objective lens 8, and the deviation in a position between a condition of the light spot on the magnetizeable layer and the information track (guide grooves) can be detected. A method of detecting these servo signals is similar to that used in any one of the astigmatism method, the three-beam method and the push-pull method, all generally used in association with the optical disc.

Fig. 2 illustrates the relationship in position between the photo-detector 17 of composite element type and the reflected information light from the magneto optic disc 1, and also a detecting means. Based on respective outputs SA, SB, SC and SD of four light receiving elements A, B, C and D positioned centrally of the detecting means 17, a focusing error signal $F_E$ and a main beam tracking error signal $T_{E0}$ can be obtained from the following equations.

$$F_E = (SA + SC) - (SB + SD)$$
$$T_{E0} = (SA + SD) - (SC + SB)$$

Also, based on respective outputs of light receiving elements E and F positioned on respective sides of the four light receiving elements A, B, C and D, a tracking error signal $T_{E1}$ resulting, from two auxiliary beams can be obtained from the following equation.

$$T_{E1} = SE - SF$$

Of these error signals, the focusing error signal $F_E$ is used to control the drive of the objective lens 8 in a direction parallel to the optical axis which is effected by the servo control circuit and a drive device.

On the other hand, the main beam tracking error signal $T_{E0}$ and the tracking error signals $T_{E1}$ resulting from the two auxiliary beams are, after having been processed by some processes as will be described later, used to control the drive of the object lens 8 n a direction transverse to the track which is effected by the servo control circuit and the drive device.

Hereinafter, the processes necessary to effect the tracking by the use of the above-mentioned two tracking error signals will be described.

The processing circuit for processing the tracking error signals $T_{E0}$ and $T_{E1}$ is shown in Fig. 3. Reference numerals 112 and 113 represent calculators, respectively, each of said calculators being a differential circuit that may perform an addition or a subtraction, depending on the relationship in phase between the error signals $T_{E1}$ and $T_{E0}$. This circuit shown in Fig. 3 is so designed that, where the error signal $T_{E0}$ according to the push-pull system and the error signal $T_{E1}$ according to the Twin Spot system can be obtained from a combination of the calculator 112 and the calculator 109 as shown in Fig. 4(b), a difference signal S representative of the difference between the signal S' and the error signal $T_{E0}$ can be obtained from the calculator 113 as shown in, Fig. 4(c). By the utilization of this difference signal S, the accurate tracking can be accomplished.

Thus, by the use of the foregoing technique according to the present invention, a tracking error signal for the tracking can be automatically corrected even though the offset occurs in the push-pull signal, and therefore, the stable tracking can be accomplished. In addition, since the reduced component of the tracking error signal according to the Twin Spot system is utilized, any external disturbance which would occur during the tracking at the boundary between the recorded or non-recorded area or the guide grooves and address region can be minimized to a negligible extent.

From the foregoing, it is clear that the present invention is effective to provide the tracking system which utilizes the advantages of both the Twin Spot system and the push-pull system. Moreover, even with the optical disc having the guide grooves and the address regions as well as the optical disc of a type which would result in change of the reflectivity, the tracking system of the present invention can ensure a sufficiently stabilized tracking performance.

## Claims

1. A tracking system for tracking the focused beam on the recording track of an optical disk by the use of a main light beam (B3) and two auxiliary light beams (B1,B2),
   wherein the tracking is performed by a tracking signal (S) generated by utilization of the difference between a first tracking error signal ($T_{E1}$) resulting from the two auxiliary light beams and a second tracking error signal ($T_{E0}$) derived from the main light beam,
   **characterized in that**
   a low-frequency component (S') of said difference between said first and second tracking error signal ($T_{E0}$) is used for obtaining said tracking signal (S).

2. The tracking system of claim 1, wherein a difference generating means (113) for generating a tracking signal (S) receives as one input thereof a low pass filtered difference signal indicative of the difference between said first and second tracking error signals ($T_{E1},T_{E0}$) and as the other input thereof said second tracking error signal ($T_{E0}$).

## Patentansprüche

1. Nachführsystem zum Nachführen des fokussierten Strahls auf der Aufzeichnungsspur einer optischen Scheibe durch Verwendung eines Hauptlichtstrahls (B3) und zweier Hilfslichtstrahlen (B1, B2),
   wobei die Nachführung durch ein Nachführsignal (s) erfolgt, das durch Verwendung der Differenz zwischen einem sich aus den beiden Hilfslichtstrahlen ergehenden ersten Nachführfehlersignal ($T_{E1}$) und einem von dem Hauptlichtstrahl abgeleiteten zweiten Nachführfehlersignal ($T_{E0}$) erzeugt wird,
   dadurch gekennzeichnet, daß
   eine Niederfrequenzkomponente (S') der Differenz zwischen dem ersten und dem zweiten Nachführfehlersignal ($T_{E0}$) verwendet wird, um das Nachführsignal (S) zu erhalten.

2. Nachführsystem nach Anspruch 1, bei dem eine Differenzerzeugungseinrichtung (113) zur Erzeugung eines Nachführsignals (S) als einen seiner Eingänge ein tiefpaßgefiltertes Differenzsignal, das die Differenz zwischen dem ersten und dem zweiten Nachführfehlersignal ($T_{E1}$, $T_{E0}$) angibt, und als seinen zweiten Eingang das zweite Nachführfehlersignal ($T_{E0}$) empfängt.

**Revendications**

1.  Système de poursuite pour suivre le faisceau focalisé sur la piste d'enregistrement d'un disque optique à l'aide d'un faisceau lumineux principal (B3) et de deux faisceaux lumineux auxiliaires (B1, B2), dans lequel la poursuite est effectuée par un signal de poursuite (S) généré par l'utilisation de la différence entre un premier signal d'erreur de poursuite ($T_{E1}$) résultant des deux faisceaux lumineux auxiliaires, et un second signal d'erreur de poursuite ($T_{E0}$) dérivé du faisceau lumineux principal, caractérisé en ce qu'une composante basse fréquence (S') de ladite différence entre lesdits premier et second signaux d'erreur de poursuite ($T_{E1}$, $T_{E0}$) est utilisée pour obtenir ledit signal de poursuite (S).

2.  Système de poursuite selon la revendication 1, dans lequel un moyen générateur de différence (113) servant à générer un signal de poursuite (S) reçoit, formant l'une de ses entrées, un signal de différence filtré par un filtre passe-bas, représentatif de la différence entre lesdits premier et second signaux d'erreur de poursuite ($T_{E1}$, $T_{E0}$) et, formant son autre entrée, ledit second signal d'erreur de poursuite ($T_{E0}$).

## Fig. 1

## Fig. 2

Fig. 3

Fig. 4 (a)

Fig. 4 (b)

Fig. 4 (c)

Fig. 5

Fig. 6 (a) Prior Art

Fig. 6 (b) Prior Art

Fig. 6 (c) Prior Art

(A)

(B)

(A-B)

Fig. 7 (a) Prior Art

*Fig. 7 (b) Prior Art*

*Fig. 7 (c) Prior Art*